# DEMANDE DE BREVET EUROPEEN

(11) **EP 1 479 560 A1**
(43) Date de publication de la demande: **24.11.2004**
(21) Numéro de dépôt: 04300286.4
(22) Date de dépôt: 18.05.2004
(51) Int. Cl.: B60N 2/08

(54) **Dispositif de coulissement**

(30) Priorité: 23.05.2003 FR 0306272
(71) Demandeur: Renault s.a.s., 92100 Boulogne Billancourt (FR)
(72) Inventeur: Feyel, Marie-Claire, 78000 Versailles (FR); Gontier, Gérald, 49400 Saumur (FR); Panhelleux, Jérome, 75015 Paris (FR); Mouvaux, Jean-Yves, 59273 Fretin (FR); Soullier, Bernard, 59112 Annoeullin (FR)

(57) **Abrégé**

L'invention concerne un système de console coulissante, comprenant un chariot (12) et une console munie d'un rail (20) présentant des échancrures (22), ladite console étant engagée dans ledit chariot (12) pour y coulisser, ledit chariot (12) comprenant des moyens de blocage (26) de ladite console qui présentent une partie de corps et une partie active, ladite partie de corps étant susceptible d'être entraînée selon une direction transversale par des moyens commandables ; lesdites échancrures (22) sont régulièrement espacées les unes des autres d'une distance déterminée ; et ladite partie active (30) comporte deux pions de positionnement (24, 25) dont les axes sont espacés d'une distance multiple de ladite distance déterminée, et dont l'un desdits pions de positionnement présentent des dimensions radiales selon la direction dudit rail, inférieures aux dimensions radiales de l'autre pion de positionnement.

## Description

La présente invention se rapporte à un système de console coulissante pour véhicule automobile.

Des systèmes de console coulissante connus, comprennent un chariot qui est maintenu en position fixe par rapport au plancher du véhicule automobile et une console destinée à coulisser par rapport au chariot.

La console est munie d'un rail présentant des échancrures et elle est engagée dans ledit chariot de façon que le rail puisse y coulisser. Par ailleurs, le chariot comprend des moyens de blocage de la console présentant une tige susceptible d'être entraînée par un actionneur électrique selon une direction transversale, par rapport à la direction de coulissement de la console et du rail, entre une position de verrouillage dans laquelle la tige est engagée dans une échancrure du rail vers une position de déverrouillage dans laquelle la tige est dégagée de l'échancrure. L'actionneur électrique est orienté transversalement, dans l'axe de la tige qui le prolonge, malgré un espace disponible de faible dimension.

On pourra notamment se référer au document FR 2 822 770 qui décrit un tel système.

Ces systèmes présentent toutefois des inconvénients liés à la fiabilité du verrouillage, aussi bien dans les conditions de fonctionnement usuelles que dans une situation de choc vicient. Le verrouillage est en effet mal assuré, d'une part à cause de la nature des moyens de blocage et d'autre part, de la faible puissance de l'actionneur électrique, qui compte tenu de l'espace disponible ne peut être augmentée consldérablement.

Un but de la présente invention est alors de proposer un système de console coulissante qui permette un verrouillage plus fiable.

Dans ce but, la présente invention propose un système de console coulissante, comprenant un chariot maintenu en position fixe par rapport au plancher et une console munie d'un rail présentant des échancrures qui définissent des bords latéraux, ladite console étant engagée dans ledit chariot pour y coulisser, ledit chariot comprenant des moyens de blocage de ladite console qui présentent une partie de corps et une partie active, ladite partie de corps étant susceptible d'être entraînée selon une direction transversale par des moyens commandables, d'une position de verrouillage dans laquelle ladite partie active coopère avec les échancrures vers une position de déverrouillage dans laquelle elle est dégagée desdites échancrures ; lesdites échancrures sont régulièrement espacées les unes des autres d'une distance déterminée ; et ladite partie active comporte deux pions de positionnement dont les axes sont espacés d'une distance multiple de ladite distance déterminée, et dont l'un desdits pions de positionnement présentent des dimensions radiales selon la direction dudit rail, inférieures aux dimensions radiales de l'autre pion de positionnement de façon à être libre par rapport aux bords latéraux d'une échancrure lorsque ledit autre pion de positionnement est en appui contre les bords latéraux d'une échancrure voisine.

De la sorte, un seul des pions de positionnement est actif dans ladite position de verrouillage, ce qui permet de préserver l'autre pion de positionnement qui est a priori mécaniquement intact et en conséquence, de suppléer le premier pion de positionnement en cas de rupture de ce dernier. En outre, dans une situation de choc violent, où l'accélération de la console par rapport à son support peut provoquer de fortes contraintes sur le pion de positionnement allant jusqu'à une rupture brutale, il est important d'amortir le déplacement de la console par rapport au support dans l'habitacle, Grâce aux deux pions de positionnement, actifs séquentiellement, cet amortissement en cas de choc est rendu possible ; la déformation ou la rupture du premier pion de positionnement absorbant une partie de l'énergie cinétique de la console, une seconde partie étant absorbée par le second plon de positionnement qui à son tour devient actif.

Par ailleurs, les axes desdits pions de positionnement sont espacés d'une distance multiple de ladite distance déterminée, de une à n fois, mais avantageusement entre une et quatre afin de ménager les efforts sur le rail.

Lesdites échancrures sont, de façon particulièrement avantageuse, de symétrie rectangulaire et lesdits pions de positionnement présentent une extrémité de section droite carrée adaptée à coopérer avec lesdites échancrures. Ainsi, les pions de positionnement présentent des faces d'appui latérales adaptées à venir en butée contre les bords latéraux des échancrures qui sont droits. De la sorte, d'une part la résistance mécanique de la liaison des pions de positionnement par rapport au rail est améliorée et d'autre part, l'usure des faces d'appui contre les bords latéraux droits est moindre que celle d'un pion de positionnement cylindrique, par exemple.

Selon un mode particulier de mise en oeuvre de l'invention, lesdits pions de positionnement présentent une extrémité libre en pointe pour être engagés plus aisément dans les échancrures, même si les pions de positionnement ne sont pas exactement situés en regard des échancrures ; le centrage étant réalisé à mesure que les pions de positionnement, en appui contre la bord des échancrures, sont entraînés vers leur position de verrouillage.

Selon encore un autre mode de mise en oeuvre de l'invention, particulièrement avantageux, lesdits axes desdits pions de positionnement sont espacés l'un de l'autre d'une distance double de ladite distance déterminée qui sépare lesdites échancrures. Ainsi, non seulement la console présente autant de positions de blocage, moins deux, qu'il y a d'échancrures, mais l'espacement des pions permet également de solliciter le rall en des points espacés l'un de l'autre, ce qui répartit l'effort subi par ledit rail.

De préférence, que lesdits moyens commandables sont adaptés à être commandés par des moyens de commande montés sur ladite console et constitués par exemple d'un interrupteur apte à fermer un circuit d'alimentation en courant électrique des moyens moteur.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels ;
- la Figure 1 est une vue schématique en coupe droite d'un mode de réalisation d'un système de console coulissante conforme à l'invention ;
- la Figure 2 est une vue schématique en perspective de détail du système de console coulissante illustré sur la Figure 1 ;
- la Figure 3 est une vue schématique de dessus et de détail de la Figure 2 ;
- la Figure 4 est une vue schématique en perspective de détail d'un élément illustré sur les autres Figures ;
- la Figure 5 est une vue schématique partielle de détail de l'élément illustré sur la Figure 4 ; et,
- la Figure 6 est une vue schématique de face de l'élément illustré sur la Figure 4.

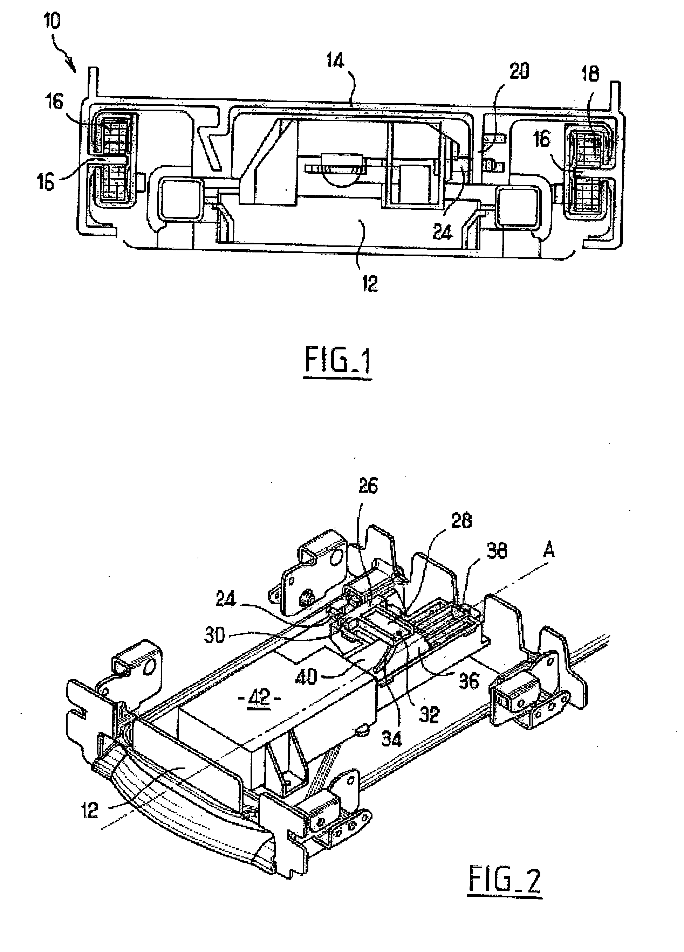

La Figure 1 représente un ensemble de guidage 10 d'une console pour véhicule automobile qui est non représentée. Cet ensemble de guidage 10 comporte un chariot 12 monté en position fixe sur la paroi de plancher du véhicule et un rail 14 destiné à coulisser sur le chariot 12 et à supporter ladite console.

Ce couinement est permis selon une direction perpendiculaire au plan du dessin, grâce aux parois latérales du rail 14 qui présentent des ailes en saillie engagées dans des paires d'organes de guidage 18. Ces derniers équipent les parois latérales du chariot 12.

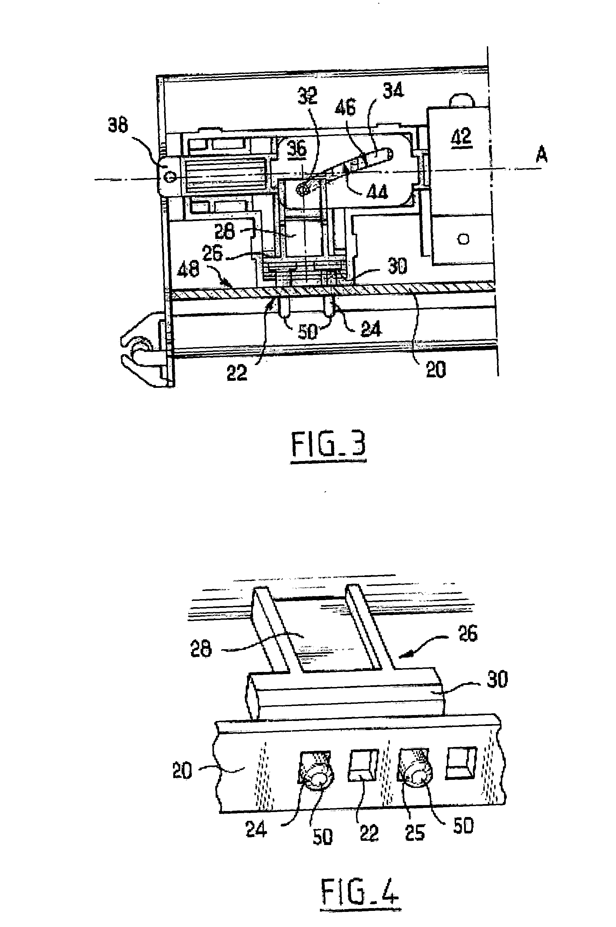

En outre, apparaît sur le dessin de la Figure 1 en coupe, un rail de positionnement 20 qui s'étend longitudinalement parallèlement à la direction de coulissement. Le rail de positionnement 20 que l'on retrouve plus en détail sur la Figure 4 présente des échancrures ou lumières 22 formées de perçages le traversant de part en part ; lesdites lumières 22 étant destinées à recevoir des pions de positionnement 24, 25 que l'on retrouve également sur la Figure 1 en vue de côté. Sur cette Figure 1, le pion de positionnement 24 traverse une lumière 22 du rail de positionnement 20 et bloque ainsi le rail 14 en translation.

On expliquera plus en détail le fonctionnement du mécanisme de blocage du rail 14, dans la description qui va suivre, tout d'abord en référence à la Figure 2.

La Figure 2 illustre plus précisément le mécanisme de blocage du système de console coulissante conforme à l'invention. Sur cette Figure 2, le rail 14 a été retiré et seules des parties du chariot 12 ont été représentées pour mieux distinguer les différentes parties constitutives du mécanisme de blocage.

Ce dernier comprend des moyens de blocage 26 présentant une partie de corps 28 et une partie active 30 comportant les pions de positionnement 24, 25. Les moyens de blocage sont destinés à être entraînés en translation perpendiculairement à l'axe de coulissement A du rail 14, de façon à entraîner les pions de positionnement 24, 25 longitudinalement dans les lumières 22, Illustrées sur la Figure 4.

Pour ce faire, la partie de corps 28 des moyens de blocage 26 présente un ergot 32 dont la base fait légèrement saillie sur la face de partie de corps 28 apparaissant sur la Figure 2, mais dont l'extrémité libre est en saillie sur la face opposée et engagée dans une rainure 34 d'un organe d'entraînement 36. Ce dernier présente une première extrémité 38 adaptée à être guidée en translation et une seconde extrémité 40 reliée à des moyens moteur 42, constitués d'un moteur électrique et destiné à entraîner l'organe d'entraînement 36 dans la direction de l'axe de coulissement A. La partie Intermédiaire de l'organe d'entraînement 36, située entre les deux extrémités 38, 40 et dans laquelle est ménagée la rainure 34 forme un méplat.

En outre, comme l'illustre encore plus en détail la Figure 3, la rainure 34 est inclinée par rapport à la direction de déplacement de l'organe d'entraînement 36 ou de l'axe de coulissement A, de sorte que ses premier et second bords 44, 46, opposés l'un de l'autre, forment rampe pour l'ergot 32.

Tels que représentés sur la Figure 3, sur laquelle on retrouve le rail de positionnement 20 parallèle à l'axe de coulissement A, les moyens de blocage 26 sont dans une position de verrouillage car les pions de positionnement 24 traversent les lumières 22 du rail de positionnement 20. Dans cette positon, le rail de positionnement 20 qui forme avec le rail 14 une même pièce sur laquelle est montée la console, sont bloqués en translation selon l'axe de coulissement A.

Le déblocage du rail 14 par rapport au chariot 12 dont l'organe d'entraînement 36 et les moyens de blocage 26 sont solidaires, s'effectue en entraînant les moyens de blocage 26 dans une position de déverrouillage.

Pour ce faire, les moyens moteur 42 sont actionnés, par exemple au moyen d'un interrupteur non représenté situé sur la console, de façon à commander l'entraînement de l'organe d'entraînement, tel que représenté sur la Figure 3, dans une direction opposée audit moyens moteur 42. De la sorte, le second bord 46 de la rainure 34 forme rampe pour l'ergot 32 qui est lui solidaire de la partie de corps 28 et l'entraîne dans une direction opposée au rail de positionnement 20. Ainsi, la partie active 30 entraîne les pions de positionnement 24 en dehors des lumières 22 et libère le rail de positionnement 20 qui peut être entraîné librement à coulissement avec la console.

De façon particulièrement avantageuse, les moyens moteur 42 comprennent un ressort de rappel non représenté qui, dès que les moyens moteur 42 cessent d'être actionnés, entraîne l'organe d'entraînement 36 dans sa position initiale telle que représenté sur la Figure 3, et par là-même, grâce à la coopération du premier bord 44 et de l'ergot 32, entraîne les moyens de blocage 26 dans la position de verrouillage.

Cependant, les pions de positionnement 24, 25 ne sont pas nécessairement situés en regard des lumières 22, de sorte qu'ils peuvent venir en appui contre la paroi interne 48 du rail de positionnement 20. Dans cette position, d'équilibre relativement instable, les pions de positionnement 24, 25 s'engageront dans les lumières 22 grâce au ressort de rappel dès que le rail de positionnement aura coulissé légèrement pour amener les lumières 22 en regard des pions de positionnement 24, 25.

Pour augmenter la probabilité pour que le verrouillage s'opère dés que les moyens moteur 42 cessent d'être actionnés, les pions de positionnement 24, 25 présentent une extrémité libre 50 en pointe permettant l'engagement au moins partiel des pions de positionnement 24, 25 dans les lumières 22 lorsqu'ils ne sont pas exactement en face.

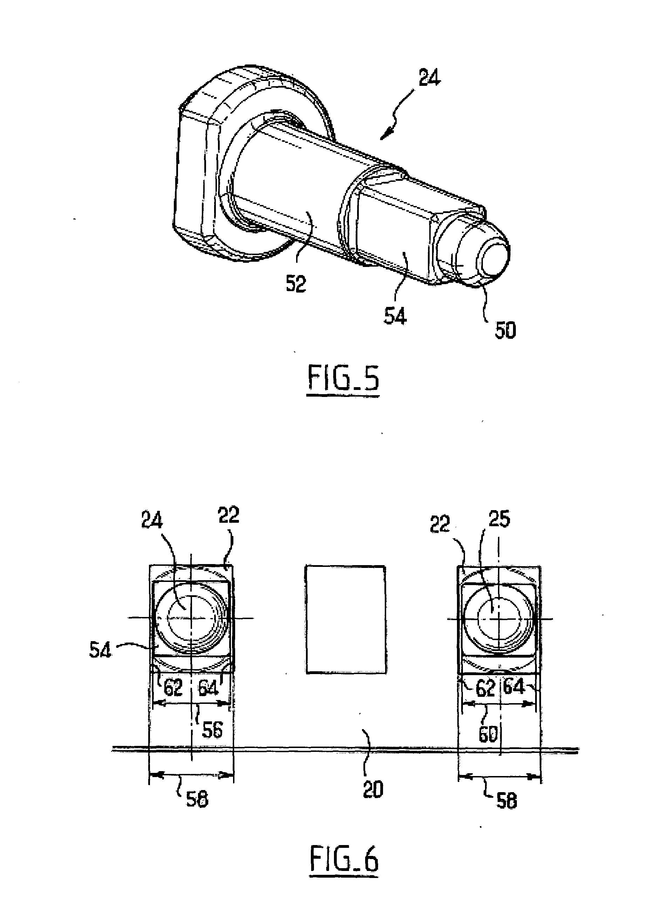

La Figure 5 illustre plus en détail un pion de positionnement 24, 25 présentant une telle extrémité libre 50 en pointe. Dans la position intermédiaire, partiellement engagée, le rail de positionnement 20 est partiellement bloqué en translation et le moindre coulissement permet aux pions de positionnement 24, 25 de terminer leur course par l'intermédiaire du ressort de rappel.

En outre, les pions de positionnement 24, 25 dont l'un est représenté sur la Figure 5, ont des formes similaires. Ils présentent une partie de corps 52 dont la section droite est sensiblement circulaire ou par exemple de forme dodécagonale et une extrémité 54 qui est prolongée par ladite extrémité libre 50. L'extrémité 54 est de section droite carrée et elle est adaptée à coopérer avec les lumières 22, qui elles sont rectangulaires comme on va l'expliquer ci-après.

Dans un mode de réalisation de l'invention particulièrement avantageux, d'une part les lumières 22 sont régulièrement espacées les unes des autres et d'autre part, les pions de positionnement 24, 25, représentés notamment sur la Figure 4, sont au nombre de deux, parallèles entre eux et espacés l'un de l'autre d'une distance égale à deux fois celle qui sépare les lumières 22. En outre, le premier pion de positionnement 24 présente une section droite, supérieure à la section droite du second pion de positionnement 25, comme on va l'expliquer en référence à la Figure 6.

On retrouve sur cette Figure 6, les pions de positionnement 24, 25 engagés dans les lumières rectangulaires 22 qui sont espacées les unes des autres le long du rail de positionnement 20.

La largeur 56 de l'extrémité 54 du premier plon de positionnement 24, qui est par exemple comprise entre 4,2 et 3,8 mm, est bien évidemment inférieure à la largeur 58 de la lumière 22 qui est par exemple comprise entre 4,2 et 4,6 mm. De plus, la largeur 60 de l'extrémité 54 du second pion de positionnement 25 est inférieure à celle 56 du premier pion de positionnement 24 et elle est comprise par exemple entre 3,8 et 3,4 mm.

Ainsi, seul le premier pion de positionnement 24 est actif et prend appui contre l'un 62 des deux bords latéraux 62, 64 d'une lumière 22 pour bloquer en coulissement le rail de positionnement 20, tandis que le second pion de positionnement 25 reste libre par rapport aux bords latéraux 62, 64 de la lumière 22 voisine dans laquelle il est engagé. De la sorte, le second pion de positionnement 25 est préservé de toute contrainte mécanique, durant le fonctionnement normal du système de console, ce qui permet non seulement de conserver les propriétés de l'organe de blocage 26 lors d'une rupture intempestive du premier pion de positionnement 24, mais aussi de compléter les capacités de blocage du rail de positionnement 20 lors d'un choc violent et d'amortir le déplacement de la console par rapport à son support.

De plus, la largeur 66 illustrée sur la Figure 6, séparant deux lumières 22 est telle que les pions de positionnement 24, 25 qui seraient positionnés entre deux lumières 22 sont automatiquement placés dans la position de verrouillage à la moindre accélération. En outre, cette largeur 66 est suffisamment réduite, sensibleinent deux fois la largeur 60 ou 56 des extrémités 54 du premier 24 ou du second 25 pion de positionnement, par exempte 7,6 mm, pour éviter que la console ne prenne trop de vitesse pour un déplacement sur une distance Inférieure à la largeur 66, même en cas de trop forte accélération.

## Revendications

1. Système de console coulissante, comprenant un chariot (12) maintenu en position fixe par rapport au plancher et une console munie d'un rail (20) présentant des échancrures (22) définissant des bords latéraux, ladite console étant engagée dans ledit chariot (12) pour y coulisser, ledit chariot (12) comprenant des moyens de blocage (26) de ladite console qui présentent une partie de corps et une partie active, ladite partie de corps étant susceptible d'être entraînée selon une direction transversale par des moyens commandables, d'une position de verrouillage dans laquelle ladite partie active coopère avec les échancrures (22) vers une position de déverrouillage dans laquelle elle est dégagée desdites échancrures (22),
**caractérisé en ce que**, lesdites échancrures (22) sont régulièrement espacées les unes des autres d'une distance déterminée ;
et **en ce que** ladite partie active (30) comporte deux pions de positionnement (24, 25) dont les axes sont espacés d'une distance multiple de ladite distance déterminée, et dont l'un desdits pions de positionnement présentent des dimensions radiales selon la direction dudit rail, inférieures aux dimensions radiales de l'autre pion de positionnement de façon à être libre par rapport aux bords latéraux d'une échancrure (22) lorsque ledit autre pion de positionnement est en appui contre les bords latéraux d'une échancrure (22) voisine.

2. Système de console coulissante selon la revendication 1, **caractérisé en ce que** lesdits moyens commandables comprennent un organe d'entraînement (36) adapté à être entraîné dans la direction de coulissement de ladite console.

3. Système de console coulissante selon la revendication 2, **caractérisé en ce que** ledit organe d'entraînement comporte une rainure (34) inclinée par rapport à ladite direction de coulissement et lesdits moyens de blocage (26) présentent un ergot (32) engagé dans ladite rainure (34).

4. Système de console coulissante selon l'une quelconque des revendications 1 à 3, **caractérisé en ce que** lesdites échancrures (22) sont de symétrie rectangulaire et **en ce que** lesdits pions de positionnement (24) présentent une extrémité de section droite carrée adaptée à coopérer avec lesdites échancrures (22).

5. Système de console coulissante selon l'une quelconque des revendications 1 à 4, **caractérisé en ce que** lesdits pions de positionnement (24) présentent une extrémité libre en pointe (50).

6. Système de console coulissante selon l'une quelconque des revendications 1 à 5, **caractérisé en ce que** lesdits axes desdits pions de positionnement (24) sont espacés l'un de l'autre d'une distance double de ladite distance déterminée qui sépare lesdites échancrures (22).

7. Système de console coulissante selon l'une quelconque des revendications 1 à 6, **caractérisé en ce que** ladite partie active (30) comporte en outre, au moins un troisième pion de positionnement.
